# EUROPEAN PATENT APPLICATION

(11) **EP 2 789 866 A1**
(43) Date of publication of application: **15.10.2014**
(21) Application number: 11876862.1
(22) Date of filing: 05.12.2011
(51) Int. Cl.: F16C 29/04

(54) **COMPACT LINEAR ROLLER GUIDE**

(71) Applicant: Salguero Beltran, Andrés Ernesto, Bogotá (CO); Manrique Torres, Martha Ruth, Bogotá (CO); Yamhure Kattah, Germán, Bogotá (CO); Pontificia Universidad Javeriana, Bogotá (CO)
(72) Inventor: SALGUERO BELTRAN, Andrés Ernesto, Bogotá (CO); MANRIQUE TORRES, Martha Ruth, Bogotá (CO); YAMHURE KATTAH, Germán, Bogotá (CO)
(74) Representative: Carvajal y Urquijo, Isabel
(86) International application number: PCT/IB2011/055465
(87) International publication number: WO 2013/084024

(57) **Abstract**

The invention relates to a compact linear roller guide which makes it possible to transmit high forces and torques between a carriage (1) and a guide rail (3). The carriage (1) comprises two or more pairs of ribbed rollers (2), rotatably supported on the side walls of the carriage by means of bearings, between which the rail (3) is inserted, with a complementary cross-section. The simultaneous contact of the planar and convex surfaces of the rail (3) with the cylindrical and concave surfaces of the rollers (2) enables uniform distribution of the loads on said bearings and a compact configuration of the guide.

## Description

### BACKGROUND OF THE INVENTION

Linear roller guides have been extensively studied and developed in recent years with the objective of increasing the precision of the linear movement, the axial and radial load capacity, the rigidity and the working life of said guides through the utilization of stronger and more hardwearing materials, the development of more efficient manufacturing techniques and the minimization of the size thereof with the objective of the implementation thereof in applications requiring both precision and high load capacity.

At the present time, for precision applications, there exist three types of linear guide systems, viz: (1) systems of shafts and linear ball bearings: for applications requiring a precision not greater than tens of microns, typically of the order of hundreds of microns; (2) guides with slides on rails: for applications having a precision of up to tens of microns or less and (3) precision guides for applications having a precision of units of microns.

However, when a linear guide system refers to precision it does not refer to high load capacity or vice versa, by virtue whereof it is necessary to satisfy both demands in the new applications for linear guides which require both characteristics to be offered.

Different configurations of linear guides have been described in the state of the art, for example the document DE 4324059 discloses a linear guide comprising a guide carriage system, a guide rail or track and rolling elements formed by a system of low-friction ball bearings. This linear guide comprises at least four rolling elements which, in this case, are ball bearings embedded in a system which holds them which, in turn, is attached to the guide carriage. These rolling elements are located in such a manner as to form geometrically equidistantly located reciprocally-parallel planes. The configuration of the rail may be appreciated in said document, it being grooved to receive the rolling elements, or it may present a convex surface which is embedded in said rolling elements.

It has also become necessary to enhance the components comprising the guide with the objective of increasing the precision of the linear displacement, of increasing the load capacity and the rigidity of the guide, and of conferring additional qualities, such as the capacity to accept axial and radial loads. In this manner the document US 2003070465 discloses a track for linear guides including one or more raceway tracks or slots whereupon the rolling elements are supported and which are displaced along said track. Said track for linear guides presents the characteristic of being grooved, allowing the rolling elements to be located in a fixed manner in the slot of the rail, permitting said elements to be displaced with less friction by virtue of the low roughness of the surface. The foregoing discloses different configurations for the rail which permits the quantity of rolling elements to be varied and achieve different ways of locating them according to the requirement of the application. Similarly, it discloses different manufacturing procedures of said rail with the object of eliminating the disadvantages presented by the conventional rails of the linear guides and reducing the manufacturing cost, maintaining the exactitude and precision of said devices.

The present document discloses a compact linear roller guide which, by virtue of the configuration and geometric distribution thereof, is capable of transmitting forces and high tension moments, in addition to achieving high precision in the linear displacement of the load. This linear guide in turn presents novel characteristics, such as the implementation of grooved rollers guided by means of a guide rail having surfaces especially designed to uniformly distribute the load on all the rollers comprised in the sliding carriage. The constructive characteristics of the present linear guide permit a system of power transmission to be realized between the sliding carriage and the guide rail by inserting a motor and the support thereof into at least one of the walls of the sliding carriage and within the space between the grooved rollers in such manner that, by means of a pinion mounted on the motor shaft, power may be transmitted to the rail by a longitudinally abutting rack, maintaining the very small physical dimensions, permitting the utilization of said linear guide in diverse applications requiring both precision and high load capacity.

### DESCRIPTION OF THE FIGURES

Figure 1 provides a perspective illustration of an embodiment of the linear roller guide according to the present invention.
Figure 2 is a view of a transverse plane of the guide depicted in Figure 1, wherein there is depicted how the guide and load transmission rail is inserted within the assembly of a pair of rotational support elements and grooved rollers and, furthermore, how the latter are mounted in the lateral walls of the sliding carriage.
Figure 3 is a cross sectional perspective view of the guide depicted in Figure 1, wherein the upper and lower plates of the guide carriage have been omitted to depict the disposition of two pairs of rotational support elements and grooved rollers, and how the guide and load transmission rail is longitudinally inserted therebetween.
Figure 4 is a perspective view of the guide depicted in Figure 1, wherein the components of the sliding carriage are depicted in detail.
Figure 5 depicts the novel system of power transmission employed by the linear guide of the invention, which is connected between the sliding carriage and the guide and load transmission rail.

### DETAILED DESCRIPTION OF THE INVENTION

The present invention discloses a compact linear roller guide capable of transmitting forces and high torques between a sliding carriage, defined by a longitudinal axis and a rectangular cross section, and a guide and load transmission rail inserted longitudinally into the carriage and housed between an assembly of rotational support members and grooved rollers mounted in the sliding carriage, said grooved rollers radially traversing the sliding carriage, to be inserted in a perpendicular manner into two of the facing lateral walls thereof, said insertion being realized in the internal raceways of respective bearings mounted in said facing lateral walls, the rollers being disposed in at least two pairs distributed in both radial planes separated by a certain distance above the longitudinal axis. The planar and convex bearing surfaces of the guide and load transmission rail are in simultaneous contact with the corresponding planar and concave bearing surfaces of all the grooved rollers of the at least two pairs of rollers. Said simultaneous contact permits the uniform distribution of forces and torques between the rotational support bearings, reducing the load demands on said individual bearings. Such constructional characteristics permit the linear guide of the present invention to maintain physical dimensions considerably smaller than the existing art whilst supporting the same load demands.

In another aspect of the present invention there is disclosed a compact linear roller guide capable of transmitting forces and high torques between a sliding carriage, defined by a longitudinal axis and a rectangular cross section, and a guide and load transmission rail inserted longitudinally into the carriage, housed between an assembly of rotational support members and grooved rollers mounted in the sliding carriage, wherein the bearings whereby the grooved rollers are supported receive axial and radial loads, but wherein the transmission of the load between the sliding carriage and the guide and transmission rail is uniformly distributed between the individual bearings in such a manner that a special design of the latter is not required, consequently standard bearings may be employed facilitating the construction of the linear guide.

In a third aspect of the invention there is disclosed a compact linear roller guide capable of transmitting forces and high torques between a sliding carriage, defined by a longitudinal axis and a rectangular cross section, and a guide and load transmission rail inserted longitudinally into the carriage and housed between an assembly of rotational support members and grooved rollers mounted in the sliding carriage, wherein the constructional characteristics of the present invention permit the realization of a system of power transmission between the sliding carriage and the guide and load transmission rail, maintaining small physical dimensions through a motor and the support thereof when is inserted in at least one of the walls of the sliding carriage in the space between the pairs of grooved rollers such that, by means of a pinion mounted on the motor shaft, power may be transmitted to the guide and load transmission rail by a rack abutting onto the corresponding longitudinal flank.

### DESCRIPTION OF THE PREFERRED EMBODIMENT OF THE INVENTION

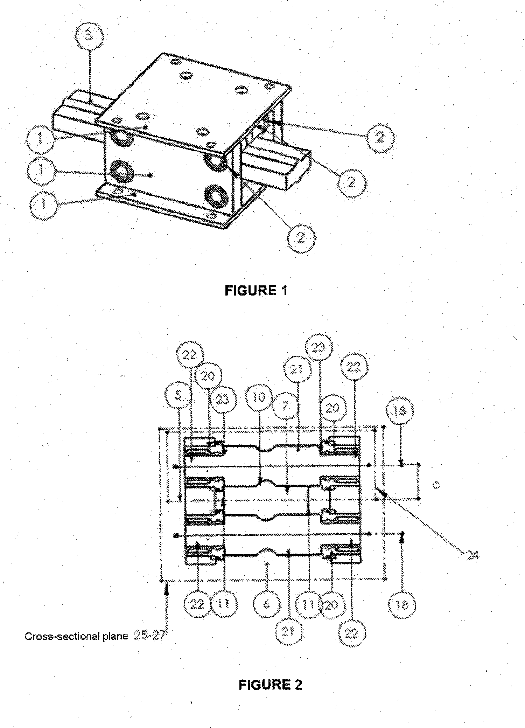

Figure 1 provides a perspective view of an embodiment of the linear guide of the present invention wherein there is included a sliding carriage 1, having a plurality of rotational support and rolling elements 2, and a guide and load transmission rail 3. The guide and transmission rail 3 is inserted within the sliding carcass supported by the rotational and rolling support elements 2.

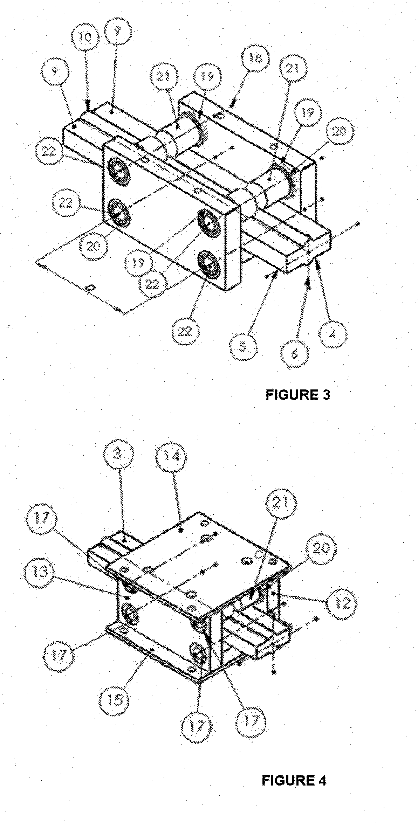

Figure 2 depicts a cross section of the linear guide without the upper and lower portions of the sliding carriage 1, showing in detail the insertion of the guide and load transmission rail 3 which extends longitudinally from each of the extremities, consequently defining an axial axis 4, depicted in Figure 3, being radially intersected by two axes, a major radial axis 5 which in turn intersects a minor radial axis 6. The axial axis 4 and the radial axes 5 and 6 are orthogonal, reciprocally intersecting in the center of the cross section 7 of the guide rail 3. The cross section 7 is formed principally by a central rectangular region whereof the greater sides run parallel to the major radial axis 5 and the smaller sides run parallel to the minor radial axis 6. Commencing from this rectangular region, and centered on the minor radial axis, from each greater side there projects a convex area 8. In Figure 3 it may be observed how the longitudinal extension of the cross section 7 produces planar longitudinal rolling surfaces 9 and convex rolling surfaces 10 and two longitudinal flanks 11, these latter may be used to attach any power transmission system for the linear guide. The adjacent areas between the planar longitudinal rolling surfaces 9 and convex rolling surfaces 10 serve to prevent the lateral displacement of the guide and load transmission rail 3 and to transmit radial loads between this latter and the grooved rollers 21. The combination of a central rectangular section and a convex section adjacent to each greater side of the rectangular section, and projected longitudinally as described, confer on the guide and load transmission rail 3 the capacity to transmit and support high torsion loads.

Figure 4 depicts the sliding carriage 1 comprising a first plate 12 facing and parallel to a second plate 13. A third plate 14 joins the first plate 12 and the second plate 13 along one of the coincident longitudinal edges thereof, a fourth plate 15 joins the first plate 12 to the second plate 13 along the coincident longitudinal second edges thereof. Plates 12, 13, 14 and 15 define a longitudinal axis and a rectangular cross section for the sliding carriage 1 such as to confer thereon a structure capable of transmitting high torsion loads. In plate 12 there are at least four through-orifices 17, each of said orifices being faced by a corresponding orifice in the second plate 13, the central axis of each pair of facing orifices being aligned with a coincident axis 18 perpendicular to the first plate 12 and to the second plate 13, forming a pair of facing and aligned orifices 19. Such an arrangement creates at least four axes of alignment 18 between the facing orifices of plates 12 and 13 and perpendicular to the latter. These orifices serve for the mounting of the plurality of rotational support and rolling elements 2. Figure 4 depicts the configuration of the plurality of rotational support and rolling elements 2; in each of the orifices forming the pair of facing and aligned orifices 19 there is mounted a bearing for combined axial and radial loads 20. Each of the at least four pairs of facing and aligned orifices 19 and the respective bearings thereof for combined axial and radial loads 20 serve as support for one of the at least four grooved rollers 21, each roller being supported at its end shanks 22 by the bearings for combined loads 20. The grooved rollers 21 have a step 23 at the extremities thereof created by the reduction in the diameter thereof to form the end shanks 22 which are inserted into the bearings for combined loads 20, the shoulder formed by said step serving as a surface of transmission of axial loads on the grooved rollers 21 towards the bearings for combined loads 20. With such a distribution each alignment axis 18 coincides with the corresponding geometric axis of one of the at least four grooved rollers 21, also coinciding with the central axes of the bearings for combined loads 20 and with the corresponding pair of facing and aligned orifices 19. In this manner there are at least four support and rolling complexes 24, viz: grooved roller 21 supported on each end shank 22 by a bearing for combined loads 20, in turn mounted in a pair of facing and aligned orifices 19, each thereof having an alignment axis 18. In turn, these at least four support and rolling complexes 24 are distributed in two pairs, wherein a first pair is organized in a first plane 25 coincident with a cross section of the sliding carriage 1 in such a manner that the corresponding alignment axes 18 of each support and rolling complex 24 run parallel within said coincident plane 25, separated by a certain radial distance c. A second pair of support and rolling complexes 24 is organized in a second plane 27 coincident with a cross section of the sliding carriage 1, and located at a certain distance d on the longitudinal axis 4 perpendicular to planes 25 and 26, in such manner that the corresponding alignment axes 18 of each support and rolling complex 24 run parallel within said coincident plane 27 separated by a certain radial distance c.

The guide and load transmission rail 3 is inserted longitudinally into the sliding carriage 1 within the intermediate space which is formed by virtue of the axial separation c between the alignment axes 18 of the respective support and rolling complexes 24 located in the corresponding transverse planes 25 and 26. In Figure 2 it is depicted how the guide and load transmission rail 3 is in simultaneous contact with all the grooved rollers 21 of the at least two pairs of rollers, the line of contact between each grooved roller 21 and the planar longitudinal rolling surfaces 9 and convex rolling surfaces 8 of the guide and load transmission rail 3 is adjusted such that there is no play in movement other than the linear movement in the longitudinal direction. The transmission of radial loads in the direction of the minor radial axis 6 of the guide and load transmission rail 3 is realized by means of the contact between the linear region of the grooved rollers 21 and the planar longitudinal rolling surfaces 9 of the guide and load transmission rail 3. The transmission of radial loads in the direction of the major radial axis 5 of the guide and load transmission rail 3 is realized by means of the contact between the concave region of the grooved rollers 21 and the convex rolling surfaces 10 of the guide and load transmission rail 3. In the foregoing manner linear guiding and load transmission is achieved free of play between the sliding carriage 1 and the guide and load transmission rail 3.

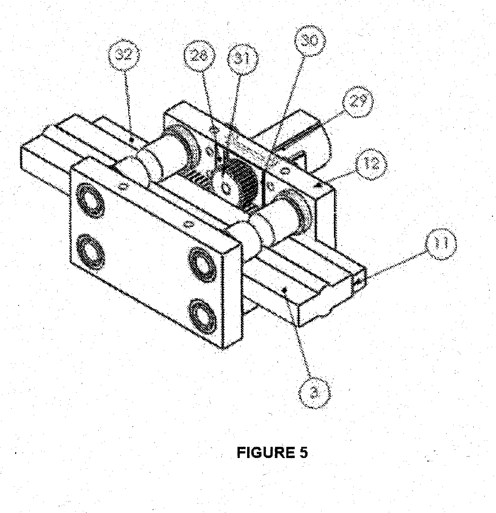

Figure 5 depicts an additional aspect of the linear guide according to the present invention. In this embodiment, provision is made for a system of power transmission for the linear guide connected between the sliding carriage 1 and the guide and load transmission rail 3. The system of power transmission includes at least: the orifice for mounting the motor 28, a motor 29, a motor support 30, a pinion 31 and a rack 32. The motor is mounted directly on one of the plates of the sliding carriage 1, for the purposes of illustration in this case on the first plate 12, by means of the insertion aperture 28 located between two pairs of the support and rolling complexes 24, the orifice 28 permitting the insertion of part of the motor 29 together with the support 30 thereof. For a compact design the pinion 31 may be mounted directly on the motor shaft 29 in such a manner that the connection is realized directly upon the rack 32 which is mounted on one of the lateral flanks 11 of the guide and load transmission rail 3.

## Claims

1. A compact linear roller guide capable of transmitting forces and high torques between a sliding carriage (1), defined by a longitudinal axis and a rectangular cross section, **characterized in that** it includes a guide and transmission rail (3) having a cross section composed of a section of rectangular area (9) alternated with two upper and lower sections of convex area (10) which is inserted longitudinally into the carriage (1), wherein said guide and transmission rail (3) is housed between an assembly of rotational support members (2) comprising at least one or more pairs of grooved rollers (21) each pair of grooved rollers being supported on shanks (22), internal raceways (19) and a bearing for axial and radial loads (20), wherein said rollers (21) radially traverse the carriage (1) to be inserted in a perpendicular manner into two of the facing lateral walls of the carriage (1).

2. The compact linear roller guide capable of transmitting forces and high torques of claim 1 **characterized in that** the longitudinal projection of the cross section of the guide and transmission rail (3) defines four planar longitudinal rolling areas (9) distributed into two upper areas and two parallel lower areas located at each extremity of the convex areas (10).

3. The compact linear roller guide capable of transmitting forces and high torques of claims 1 and 2 **characterized in that** the guide and transmission rail (3) is in simultaneous contact with all the grooved rollers (21), coinciding the planar longitudinal rolling areas (9) of the guide and transmission rail (3) with the cylindrical surface of the grooved rollers (21) and the sections of convex areas (10) of the guide and transmission rail (3) with the concave grooving of the grooved rollers (21).

4. The compact linear roller guide capable of transmitting forces and high torques of claims 1 to 3 **characterized in that** the geometric axes of the pairs of grooved rollers (21) are reciprocally parallel, being equidistant from the longitudinal axis of the sliding carriage (1) and perpendicular to the lateral walls of the sliding carriage (1).

5. The compact linear roller guide capable of transmitting forces and high torques of claims 1 to 4 **characterized in that** the pairs of grooved rollers (21) form a first group disposed in a first plane and the second pair is disposed in a second plane, said groups facing one another and perpendicularly intersecting the longitudinal axis of the sliding carriage (1).

6. The compact linear roller guide capable of transmitting forces and high torques of claims 1 to 5 **characterized in that** the insertion of the grooved rollers (21) into the facing lateral walls of the sliding carriage (1) is realized in the internal raceways (19) of said rotational support members (2).

7. The compact linear roller guide capable of transmitting forces and high torques of the preceding claims **characterized in that** it permits a system of power transmission to be connected between the sliding carriage (1) and the guide and load transmission rail (3), wherein in at least one of the facing plates wherein the bearings are mounted (21) a centered orifice (28) is realized between the planes wherein are aligned the pairs of grooved rollers (21), to insert a motor (29) and the support thereof (30), wherein by means of a pinion (31) on the motor shaft (29) power is transmitted to a rack (32) longitudinally abutting onto at least one of the flanks of the guide and load transmission rail (3).
